# DEMANDE DE BREVET EUROPEEN

(11) **EP 1 309 184 A1**
(43) Date de publication de la demande: **07.05.2003**
(21) Numéro de dépôt: 02292648.9
(22) Date de dépôt: 24.10.2002
(51) Int. Cl.: H04N 5/12

(54) **Procédé et dispositif de synchronisation d'un signal de référence sur un signal vidéo**

(30) Priorité: 26.10.2001 FR 0113905
(71) Demandeur: STMicroelectronics S.A., 92120 Montrouge (FR)
(72) Inventeur: Coste, Diego, 38760 Varces (FR)
(74) Mandataire: Casalonga, Axel

(57) **Abrégé**

Le procédé de synchronisation comporte une détection des impulsions de synchronisation horizontale successives du signal vidéo (CVBS), et une comparaison de phase entre les impulsions détectées successives et les transitions successives du signal de référence (SRF) de façon à commander l'oscillateur de la boucle à verrouillage de phase. La détection de chaque impulsion de synchronisation horizontale comporte un échantillonnage du signal vidéo, un filtrage passe-bas du signal échantillonné (SN), un seuillage du signal filtré (SNF) de façon à ne laisser subsister que des impulsions dont le niveau est inférieur à un seuil, et une sélection (MSL) en fonction d'un critère de sélection prédéterminé, parmi les impulsions résiduelles situées à l'intérieur d'une fenêtre d'observation centrée sur une transition du signal de référence, de celle (IMPS) qui correspond à ladite impulsion de synchronisation horizontale.

## Description

L'invention concerne le traitement d'un signal vidéo, et plus particulièrement la synchronisation en fréquence et en phase sur ce signal vidéo.

L'une des premières tâches d'un circuit vidéo recevant un signal vidéo analogique classique est de se synchroniser sur la fréquence et la phase de ce signal vidéo. Cette tâche de synchronisation est effectuée par une boucle à verrouillage de phase.

Une boucle de verrouillage de phase comporte classiquement un oscillateur commandable délivrant le signal de référence (qui va se synchroniser sur le signal vidéo) et un comparateur de phase dont le rôle est d'extraire du signal vidéo la position des impulsions (tops) de synchronisation horizontale et de la traduire sous la forme d'un signal d'erreur donnant l'écart de phase entre ce signal vidéo et le signal de référence. Ce signal d'erreur, après passage dans le filtre de boucle, va commander l'oscillateur de façon à ce que celui-ci se décale en fréquence pour assurer la synchronisation du signal de référence sur le signal vidéo, en l'espèce sur les tops de synchronisation horizontale du signal vidéo.

Or, la reconnaissance des tops de synchronisation horizontale est rendue difficile par la très grande diversité de qualités des signaux devant être supportés. Ainsi, le rapport signal / bruit de ces signaux peut varier de plus de 50db dans le meilleur des cas à environ 0db, voire moins, pour les cas limites auxquels la boucle à verrouillage de phase doit fonctionner.

Les solutions généralement employées aujourd'hui pour extraire la synchronisation sont essentiellement basées sur des procédés analogiques à base de multiplieurs et d'intégrateurs.

L'invention vise à proposer une solution radicalement différente pour obtenir la synchronisation sur un signal vidéo, et notamment pour la détection des tops de synchronisation horizontale.

L'invention propose donc un procédé de synchronisation d'un signal de référence issu d'un oscillateur d'une boucle à verrouillage de phase sur un signal vidéo, ce procédé comportant une détection des impulsions de synchronisation horizontale successives du signal vidéo, et une comparaison de phase entre les impulsions détectées successives et les transitions successives du signal de référence, de façon à commander l'oscillateur.

Selon une caractéristique générale de l'invention, la détection de chaque impulsion horizontale comporte un échantillonnage du signal vidéo, un filtrage passe-bas du signal échantillonné, un seuillage du signal filtré de façon à ne laisser subsister que des impulsions dont le niveau est inférieur à un seuil qui peut être prédéterminé, par exemple 50% du niveau moyen mesuré d'une impulsion de synchronisation horizontale , ou bien programmable, et une sélection en fonction d'un critère de sélection prédéterminé, parmi les impulsions résiduelles situées à l'intérieur d'une fenêtre d'observation centrée sur une transition du signal de référence, de celle qui correspond à ladite impulsion de synchronisation horizontale.

En d'autres termes, l'invention vise à analyser tous les tops générés après seuillage et à les classer suivant leur niveau de vraisemblance. Le top ayant le maximum de vraisemblance est alors sélectionné pour mettre à jour la commande de l'oscillateur de la boucle.

Plusieurs critères de sélection peuvent être envisagés.

Le critère de sélection peut comporter par exemple un critère de dimension par rapport à une dimension moyenne (largeur moyenne) d'une impulsion de synchronisation horizontale.

Ainsi, à titre indicatif, on peut éliminer toutes les impulsions résiduelles dont la largeur est inférieure à un pourcentage prédéterminé de la largeur moyenne d'une impulsion de synchronisation horizontale.

Une fois cette élimination effectuée, on peut alors par exemple sélectionner l'impulsion résiduelle dont la largeur se rapproche le plus de ladite largeur moyenne.

Le critère de sélection peut comporter un critère de position par rapport à la position attendue de l'impulsion de synchronisation horizontale.

Plus précisément, dans ce cas, la position attendue de l'impulsion de synchronisation horizontale est celle de la transition du signal de référence. On détermine alors l'écart temporel entre chaque impulsion résiduelle et la transition du signal de référence, et on sélectionne celle qui est affectée de l'écart temporel le plus faible.

Le critère de sélection peut combiner les deux critères précédemment mentionnés, c'est-à-dire le critère de position et le critère de dimensionnement.

Ainsi, selon un mode de mise en oeuvre de l'invention, on élimine toutes les impulsions résiduelles dont la largeur est inférieure à un pourcentage prédéterminé de la largeur moyenne d'une impulsion de synchronisation horizontale et on affecte à chaque impulsion résiduelle non éliminée une première note en fonction de sa largeur, la première note la plus élevée correspondant par exemple à une impulsion dont la largeur est égale à ladite largeur moyenne.

Par ailleurs, on détermine l'écart temporel entre chaque impulsion résiduelle non éliminée et la transition du signal de référence. On affecte alors une deuxième note à chaque impulsion résiduelle non éliminée, la deuxième note la plus élevée correspondant par exemple à une impulsion affectée d'un écart temporel nul.

On affecte ensuite à chaque impulsion résiduelle non éliminée une note finale résultant d'une pondération prédéterminée entre ladite première note et ladite deuxième note.

On sélectionne alors l'impulsion résiduelle affectée de la note finale la plus élevée.

La pondération peut évoluer en fonction des applications pour s'adapter notamment aux différents types de source vidéo ainsi qu'à la qualité de ce signal vidéo. Ainsi, en présence d'un bruit important, on favorisera le critère de position par rapport au critère de dimension tandis qu'en présence d'un bruit peu important, on favorisera le critère de dimension par rapport au critère de positionnement. De même, lorsque la source vidéo est par exemple un magnétoscope, ce qui conduit très probablement à un saut de phase en fin de trame, on favorisera à ce moment-là la largeur des impulsions de synchronisation par rapport à leur position.

D'autres critères de sélection peuvent être également envisagés.

On peut citer ainsi, à titre d'exemple non limitatif :
- un critère basé sur l'évaluation de l'énergie de l'ensemble des tops de la ligne par intégration simple de façon à donner une meilleure note au top situé dans la zone de plus haute énergie (un tel critère est intéressant notamment pour les signaux très bruités amenant un grand nombre de tops de largeur très variable),
- en plus d'évaluer la position des tops par rapport à la phase de la boucle à verrouillage de phase (transition du signal de référence), on peut évaluer cette position par rapport au top de la ligne précédente, ce qui permet de repérer un changement de phase durable,
- lorsque la source est un magnétoscope, on peut évaluer le saut de phase moyen, et, autour de la zone de saut de phase probable, on renforcera alors les notes des tops décalés de cette phase.
- on peut également évaluer dans quelles proportions le seuil dans la phase de seuillage a été dépassé, et on renforcera alors les notes des tops présentant de forts dépassements de seuil.
- on peut encore évaluer la pente du signal filtré lors de son seuillage et augmenter les notes des tops ressemblant à la moyenne.

La longueur de la fenêtre d'observation est par exemple de l'ordre de 2/3 de la longueur d'une ligne vidéo . En variante cette longueur de la fenêtre d'observation peut être variable, par exemple en fonction du niveau de bruit.

Afin de prendre en compte d'éventuels tops de synchronisation qui se situeraient en dehors de cette fenêtre d'observation, il est avantageux que la détection de chaque impulsion de synchronisation horizontale comporte également une détection en fonction du critère de sélection prédéterminé, parmi les impulsions résiduelles situées à l'extérieur de la fenêtre d'observation, de celle qui correspond à une impulsion de synchronisation horizontale. Et, si cette détection est positive, on initialise alors, au début de la fenêtre d'observation, l'erreur de phase commandant l'oscillateur à une valeur très élevée, de sorte que si aucune impulsion n'est sélectionnée au cours de la fenêtre d'observation, cette erreur de phase très importante va conduire à un déphasage très important de la boucle à verrouillage de phase.

En d'autres termes, selon ce mode de mise en oeuvre, on effectue une surveillance pendant la zone aveugle (zone située à l'extérieur de la fenêtre d'observation) et on recherche toutes les impulsions résiduelles masquées qui peuvent ressembler à de vraies impulsions de synchronisation horizontale. Cette ressemblance peut être par exemple simplement évaluée par la largeur des impulsions. S'il y a eu une impulsion cachée vraisemblable, on initialise alors l'écart de phase à une valeur très importante. Cette erreur de phase est bien entendu mise à jour au cours de la fenêtre d'observation. Mais, si au cours de cette fenêtre il n'y a aucune impulsion sélectionnée, on commandera l'oscillateur avec cette erreur de phase importante, ce qui amènera la boucle à verrouillage de phase à se déphaser fortement, permettant ainsi un retour rapide des impulsions de synchronisation horizontale dans la fenêtre d'observation, par exemple dès la ligne vidéo suivante.

L'invention a également pour objet un dispositif de synchronisation d'un signal de référence sur un signal vidéo, comprenant des moyens de détection aptes à détecter des impulsions de synchronisation horizontale successives du signal vidéo, et une boucle à verrouillage de phase comportant un oscillateur commandable délivrant le signal de référence, et un comparateur de phase apte à effectuer une comparaison de phase entre les impulsions détectées successives et les transitions successives du signal de référence de façon à commander l'oscillateur.

Selon une caractéristique générale de l'invention, les moyens de détection comportent des moyens d'échantillonnage du signal vidéo, un filtre passe-bas connecté aux moyens d'échantillonnage, des moyens de seuillage connectés au filtre de façon à ne laisser subsister que des impulsions dont le niveau est inférieur à un seuil, et des moyens de sélection aptes à effectuer une sélection en fonction d'un critère de sélection prédéterminé, parmi les impulsions résiduelles situées à l'intérieur d'une fenêtre d'observation centrée sur chaque transition du signal de référence, de celle qui correspond à ladite impulsion de synchronisation horizontale.

Lorsque le critère de sélection comporte un critère de dimension par rapport à une dimension moyenne d'une impulsion de synchronisation horizontale, les moyens de sélection comportent des premiers moyens de décision aptes à éliminer toutes les impulsions résiduelles dont la largeur est inférieure à un pourcentage prédéterminé de la largeur moyenne d'une impulsion de synchronisation horizontale.

Les premiers moyens de décision sont ainsi de préférence aptes à sélectionner l'impulsion résiduelle dont la largeur se rapproche le plus de ladite largeur moyenne.

Lorsque le critère de sélection comporte un critère de position par rapport à la position attendue de l'impulsion de synchronisation horizontale, les moyens de sélection comportent des moyens de détermination aptes à déterminer l'écart temporel entre chaque impulsion résiduelle et la transition du signal de référence, et des deuxièmes moyens de décision aptes à sélectionner celle qui est affectée de l'écart temporel le plus faible.

Selon un mode de réalisation de l'invention, lorsque le critère de sélection est un critère qui combine le critère de position et le critère de dimension, les moyens de sélection comportent des premiers moyens de décision aptes à éliminer toutes les impulsions résiduelles dont la largeur est inférieure à un pourcentage prédéterminé de la largeur moyenne d'une impulsion de synchronisation horizontale, et à affecter à chaque impulsion résiduelle non éliminée une première note en fonction de sa largeur, la première note la plus élevée correspondant à une impulsion dont la largeur est égale à ladite largeur moyenne. Par ailleurs, la position attendue de l'impulsion de synchronisation horizontale étant celle de la transition du signal de référence, les moyens de sélection comportent des moyens de détermination aptes à déterminer l'écart temporel entre chaque impulsion résiduelle non éliminée et la transition du signal de référence, et des deuxièmes moyens de décision aptes à affecter une deuxième note à chaque impulsion résiduelle non éliminée, la deuxième note la plus élevée correspondant à une impulsion affectée d'un écart temporel nul. Les moyens de sélection comportent alors des moyens de pondération aptes à affecter à chaque impulsion résiduelle non éliminée une note finale résultant d'une pondération prédéterminée entre ladite première note et ladite deuxième note, et des moyens de décision finaux sont aptes à sélectionner l'impulsion résiduelle affectée de la note finale la plus élevée.

Selon un mode de réalisation de l'invention, les moyens de détection comportent également des moyens de sélection supplémentaires aptes à détecter en fonction du critère de sélection prédéterminé, parmi les impulsions résiduelles situées à l'extérieur de la fenêtre d'observation, celle qui correspond à une impulsion de synchronisation horizontale, et des moyens d'initialisation aptes, si cette détection est positive, à initialiser, au début de la fenêtre d'observation, l'erreur de phase commandant l'oscillateur à une valeur très élevée, de sorte que si aucune impulsion n'est sélectionnée au cours de la fenêtre d'observation, cette erreur de phase très importante va conduire à un déphasage très important de la boucle à verrouillage de phase.

D'autres avantages et caractéristiques de l'invention apparaîtront à l'examen de la description détaillée du mode de réalisation et de mise en oeuvre, nullement limitatif et des dessins annexés sur lesquels :
- la figure 1 illustre schématiquement une ligne vidéo d'un signal vidéo,
- la figure 2 illustre schématiquement un mode de réalisation d'un dispositif de synchronisation selon l'invention,
- la figure 3 illustre plus en détail un mode de réalisation des moyens de détection d'un dispositif selon l'invention, et,
- la figure 4 illustre schématiquement un mode de mise en oeuvre du procédé selon l'invention.

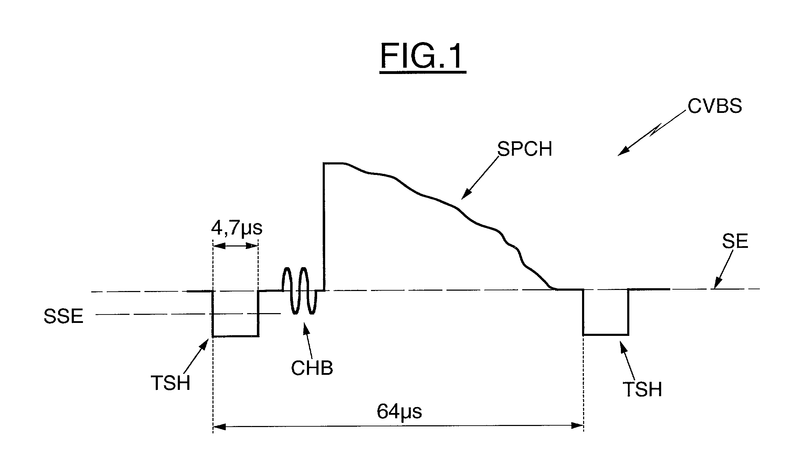

La figure 1 représente une partie d'un signal vidéo analogique CVBS correspondant à une ligne vidéo. Cette partie de signal, qui s'étend par exemple sur 64 microsecondes, débute par une impulsion de synchronisation horizontale (top de synchronisation horizontale) TSH. Cette impulsion TSH s'étend par exemple sur 4,7 microsecondes et a un niveau qui est inférieur à un seuil prédéterminé SE, par exemple correspondant au niveau de noir.

L'impulsion TSH est suivie par une salve de référence CHB qui sert de référence de phase pour le décodage de la chrominance du reste de la ligne vidéo SPCH (ligne vidéo active).

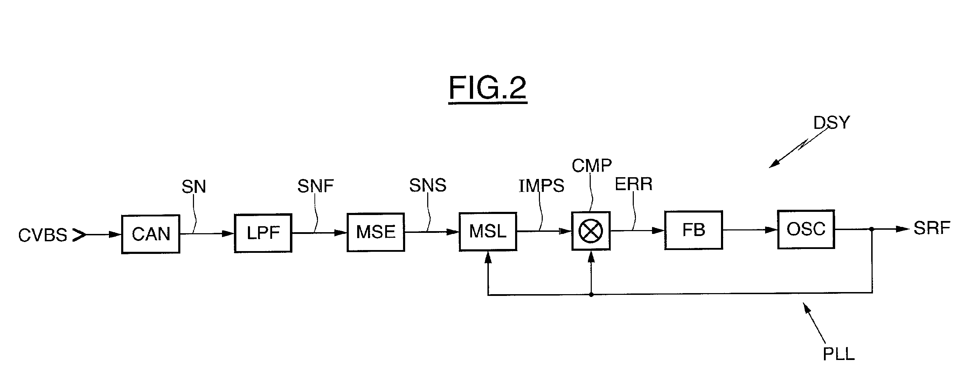

Sur la figure 2, la référence DSY désigne un dispositif de synchronisation selon l'invention.

Ce dispositif comporte en tête un convertisseur analogique numérique recevant le signal analogique CVBS et délivrant un signal numérique échantillonné SN. La fréquence d'échantillonnage est par exemple de l'ordre de 27 MHz correspondant à une horloge d'échantillonnage dont les fronts montants sont espacés de 37 nanosecondes.

Le convertisseur analogique numérique CAN est suivi d'un filtre passe-bas LPF. La fréquence de coupure de ce filtre passe-bas est typiquement comprise entre 200 kHz et 2 MHz, et de préférence comprise entre 500 kHz et 1 MHz. Un tel filtre permet d'éliminer une bonne partie du bruit et de la sous-porteuse de chrominance.

Le signal échantillonné filtré SNF est ensuite délivré à des moyens de seuillage MSE. Ceux-ci effectuent un seuillage du signal de façon à éliminer toute partie du signal SNF dont le niveau se situe au-dessus d'un seuil SEE (figure 1). Ce seuil est par exemple de l'ordre de 50% de l'amplitude moyenne mesurée d'un top de synchronisation horizontale. Le signal numérique seuillé SNS comporte par conséquent des impulsions résiduelles qui sont considérées comme étant des impulsions de synchronisation horizontale potentielles.

Des moyens de sélection MSL vont alors sélectionner, comme on va le voir plus en détail ci-après, une impulsion IMPS qui sera considérée comme étant l'impulsion de synchronisation horizontale. Cette impulsion IMPS va alors être délivrée à une boucle à verrouillage de phase classique PLL comportant un comparateur de phase CMP suivi d'un filtre de boucle FB, par exemple du type proportionnel intégral, suivi d'un oscillateur commandable OSC délivrant un signal de référence SRF.

Comme il est classique en la matière, ce signal de référence SRF est en fait le signal de sortie du dispositif de synchronisation qui va être synchronisé sur le signal vidéo. En d'autres termes, après synchronisation et en régime établi, les transitions du signal SRF correspondent aux impulsions de synchronisation horizontale contenues dans le signal vidéo. Ce signal SRF est par ailleurs rebouclé sur le comparateur de phase CMP et, comme on le verra plus en détail ci-après, également sur les moyens de sélection afin de permettre la sélection selon un critère prédéterminé.

L'oscillateur est commandé, via le filtre de boucle FB, par un signal d'erreur ERR représentatif de l'écart de phase entre l'impulsion sélectionnée IMPS et une transition du signal SRF.

Dans l'exemple qui est décrit ici, l'oscillateur est un compteur cyclique incrémenté au rythme du signal d'horloge d'échantillonnage et dont la valeur finale de comptage nominale est par exemple égale à 1727, ce qui correspond à une longueur de ligne vidéo de 64 microsecondes. Par ailleurs, la valeur finale de comptage de ce compteur cyclique peut varier par exemple de plus ou moins 300 autour de la valeur nominale de façon à pouvoir permettre la synchronisation sur le signal vidéo. Bien entendu cette variation peut être plus ou moins importante.

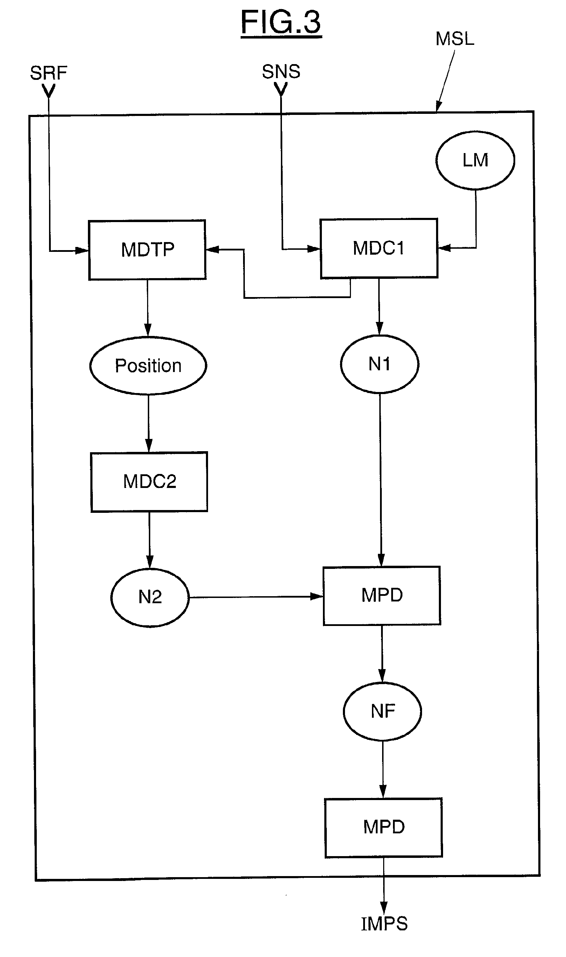

On va maintenant décrire plus en détail en se référant plus particulièrement à la figure 3, un mode de réalisation de ces moyens de sélection qui vont mettre en oeuvre un critère combiné de position et de dimension.

Plus précisément, les moyens de sélection MSL comportent des premiers moyens de décision MDC1 aptes à éliminer toutes les impulsions résiduelles du signal SNS dont la largeur est inférieure à un pourcentage prédéterminé de la largeur moyenne LM d'une impulsion de synchronisation horizontale. Ce pourcentage prédéterminé est par exemple égal à 40%. En d'autres termes, on élimine ici toutes les impulsions résiduelles trop étroites.

On affecte alors à chaque impulsion résiduelle non éliminée une première note N1 en fonction de sa largeur, la première note la plus élevée correspondant à une impulsion dont la largeur est égale à ladite largeur moyenne LM. A partir de cette note la plus élevée, on peut appliquer par exemple une fonction linéaire décroissante pour définir chaque note en fonction de la largeur détectée de l'impulsion résiduelle. Ceci étant d'autres fonctions mathématiques sont envisageables, comme par exemple une fonction puissance ou une fonction exponentielle.

Par ailleurs, les moyens de sélection comportent des moyens de détermination MDTP aptes à déterminer l'écart temporel entre chaque impulsion résiduelle non éliminée et une transition du signal de référence SRF, transition qui se produit à chaque fois que le compteur cyclique formant l'oscillateur OSC atteint sa valeur finale courante de comptage.

Des deuxièmes moyens de décision MDC2 vont alors affecter une deuxième note N2 à chaque impulsion résiduelle non éliminée, cette deuxième note N2 la plus élevée correspondant à une impulsion affectée d'un écart temporel nul. Là encore, on utilise une relation linéaire par exemple pour définir les autres notes.

Les moyens de sélection comportent alors des moyens de pondération MPD aptes à affecter à chaque impulsion résiduelle non éliminée une note finale NF résultant d'une pondération prédéterminée entre ladite première note N1 et ladite deuxième note N2.

Des moyens de détection finaux MDCF vont sélectionner alors l'impulsion résiduelle affectée de la note finale la plus élevée.

Les caractéristiques de l'impulsion sélectionnée IMPS, c'est-à-dire en particulier son écart temporel par rapport à la transition du signal de référence, vont permettre de déterminer l'erreur de phase ERR (figure 2) de façon à pouvoir commander l'oscillateur OSC en modifiant éventuellement sa valeur finale courante de comptage.

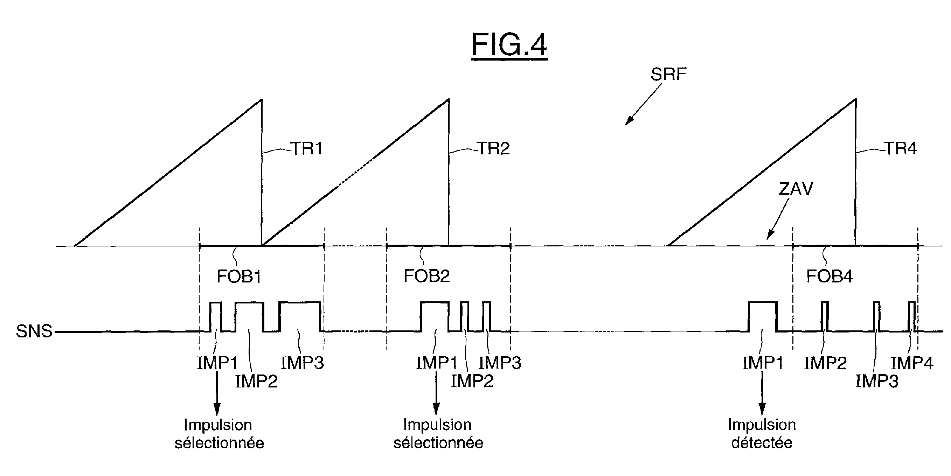

En pratique, cette sélection est effectuée au cours d'une fenêtre d'observation FOB (figure 4) centrée sur chaque transition TRi du signal de référence SRF.

Sur la figure 4, on a représenté par exemple trois transitions TR1, TR2 et TR4 du signal SRF.

Chaque fenêtre d'observation, qui a une longueur environ égale à 2/3 d'une ligne vidéo, est centrée sur la transition correspondante du signal SRF.

Ainsi, au cours de la fenêtre d'observation FOB1, le signal seuillé SNS présente trois impulsions de synchronisation horizontale potentielles IMP1, IMP2 et IMP3.

Parmi ces trois impulsions, l'impulsion IMP1 est considérée comme trop étroite tandis que l'impulsion IMP3 est considérée comme à la fois trop large et plus éloignée de la transition TR1 que l'impulsion IMP2. Par ailleurs, cette impulsion IMP2 présente une largeur qui se rapproche le plus de la largeur LM.

En conséquence, on supposera ici que c'est l'impulsion IMP2 qui est sélectionnée.

A partir de cette sélection, on calcule l'erreur de phase entre l'impulsion IMP2 et la transition TR1, ce qui va permettre de définir au cycle suivant, l'occurrence de la transition TR2.

La fenêtre d'observation FOB2 est alors centrée sur la transition TR2.

Cette fois-ci, c'est l'impulsion IMP1 qui est sélectionnée comme étant l'impulsion de synchronisation horizontale.

Le fait de centrer la fenêtre d'observation sur chaque transition permet de s'assurer qu'une impulsion sélectionnée appartient à la bonne ligne vidéo et non à une ligne vidéo adjacente.

Ceci étant, bien que la longueur de la fenêtre d'observation soit choisie suffisamment grande, il est possible dans certains cas que l'impulsion de synchronisation horizontale se situe en dehors de cette fenêtre d'observation dans une zone dite aveugle ZAV, comme c'est le cas pour l'impulsion IMP1 illustrée sur la partie droite de la figure 4.

Afin de remédier à ce problème, il est alors prévu que les moyens de détection comportent des moyens de sélection supplémentaires qui vont détecter, en fonction du critère de sélection prédéterminé, parmi les impulsions résiduelles situées à l'extérieur de la fenêtre d'observation, c'est-à-dire situées dans la zone aveugle ZAV, celle qui correspond à une impulsion de synchronisation horizontale.

Dans le cas présent, on utilisera comme critère de sélection uniquement la largeur des impulsions.

Les moyens de sélection supplémentaires sont alors simplement formés par les premiers moyens de décision MDC1.

Dans le cas où les premiers moyens de décision MDC1 détectent une impulsion de synchronisation horizontale probable dans la zone aveugle ZAV, des moyens d'initialisation vont alors initialiser au début de leur fenêtre d'observation FOB4, l'erreur de phase à une valeur très élevée. Ainsi, si aucune impulsion n'est sélectionnée au cours de la fenêtre d'observation, comme c'est le cas pour les impulsions IMP2, IMP3 et IMP4 qui sont considérées comme étant trop étroites, cette erreur de phase très importante va conduire à un déphasage très important de la boucle à verrouillage de phase permettant ainsi un retour rapide des impulsions de synchronisation horizontale dans les fenêtres d'observation suivantes.

Matériellement, les différents moyens formant les moyens de sélection peuvent par exemple être réalisés sous forme de logique câblée, ou bien de façon logicielle au sein d'un microcontrôleur.

Par ailleurs, le dispositif selon l'invention est par exemple réalisable sous la forme d'un circuit intégré au sein d'une pastille de silicium.

## Revendications

1. Procédé de synchronisation d'un signal de référence issu d'un oscillateur d'une boucle à verrouillage de phase sur un signal vidéo, comportant une détection des impulsions de synchronisation horizontale successives du signal vidéo (CVBS), et une comparaison de phase entre les impulsions détectées successives et les transitions successives du signal de référence (SRF) de façon à commander l'oscillateur, **caractérisé par le fait que** la détection de chaque impulsion de synchronisation horizontale comporte un échantillonnage du signal vidéo, un filtrage passe-bas du signal échantillonné (SN), un seuillage du signal filtré (SNF) de façon à ne laisser subsister que des impulsions dont le niveau est inférieur à un seuil, et une sélection (MSL) en fonction d'un critère de sélection prédéterminé, parmi les impulsions résiduelles situées à l'intérieur d'une fenêtre d'observation centrée sur une transition du signal de référence, de celle (IMPS) qui correspond à ladite impulsion de synchronisation horizontale.

2. Procédé selon la revendication 1, **caractérisé par le fait que** le critère de sélection comporte un critère de position par rapport à la position attendue (TRi) de l'impulsion de synchronisation horizontale (IMPS).

3. Procédé selon la revendication 2, **caractérisé par le fait que** la position attendue de l'impulsion de synchronisation horizontale est celle de la transition (TRi) du signal de référence (SRF), et **par le fait qu'**on détermine l'écart temporel entre chaque impulsion résiduelle et la transition du signal de référence, et on sélectionne celle qui est affectée de l'écart temporel le plus faible.

4. Procédé selon la revendication 1, **caractérisé par le fait que** le critère de sélection comporte un critère de dimension par rapport à une dimension moyenne (LM) d'une impulsion de synchronisation horizontale.

5. Procédé selon la revendication 4, **caractérisé par le fait qu'**on élimine toutes les impulsions résiduelles dont la largeur est inférieure à un pourcentage prédéterminé de la largeur moyenne (LM) d'une impulsion de synchronisation horizontale.

6. Procédé selon la revendication 5, **caractérisé par le fait que** qu'on sélectionne l'impulsion résiduelle dont la largeur se rapproche le plus de ladite largeur moyenne (LM).

7. Procédé selon la revendication 4 prise en combinaison avec la revendication 2, **caractérisé par le fait que** le critère de sélection est un critère qui combine le critère de position et le critère de dimension.

8. Procédé selon la revendication 7, **caractérisé par le fait qu'**on élimine toutes les impulsions résiduelles dont la largeur est inférieure à un pourcentage prédéterminé de la largeur moyenne (LM) d'une impulsion de synchronisation horizontale, et on affecte à chaque impulsion résiduelle non éliminée une première note en fonction de sa largeur, la première note (N1) la plus élevée correspondant à une impulsion dont la largeur est égale à ladite largeur moyenne, **par le fait que** la position attendue de l'impulsion de synchronisation horizontale est celle de la transition du signal de référence, **par le fait qu'**on détermine l'écart temporel entre chaque impulsion résiduelle non éliminée et la transition du signal de référence, **par le fait qu'**on affecte une deuxième note (N2) à chaque impulsion résiduelle non éliminée, la deuxième note la plus élevée correspondant à une impulsion affectée d'un écart temporel nul, **par le fait qu'**on affecte à chaque impulsion résiduelle non éliminée une note finale (NF) résultant d'une pondération prédéterminée entre ladite première note et ladite deuxième note, et **par le fait qu'**on sélectionne l'impulsion résiduelle affectée de la note finale la plus élevée.

9. Procédé selon l'une des revendications précédentes, **caractérisé par le fait que** la longueur de la fenêtre d'observation est de l'ordre de 0,66 fois la longueur d'une ligne vidéo.

10. Procédé selon l'une des revendications 1 à 8, **caractérisé par le fait que** la longueur de la fenêtre d'observation est variable.

11. Procédé selon l'une des revendications précédentes, **caractérisé par le fait que** la détection de chaque impulsion de synchronisation horizontale comporte également une détection en fonction du critère de sélection prédéterminé, parmi les impulsions résiduelles situées à l'extérieur (ZAV) de la fenêtre d'observation, de celle qui correspond à une impulsion de synchronisation horizontale, et si cette détection est positive, l'initialisation, au début de la fenêtre d'observation (FOB), de l'erreur de phase commandant l'oscillateur à une valeur très élevée.

12. Dispositif de synchronisation d'un signal de référence sur un signal vidéo, comprenant des moyens de détection aptes à détecter des impulsions de synchronisation horizontale successives du signal vidéo, et une boucle à verrouillage de phase (PLL) comportant un oscillateur (OSC) commandable délivrant le signal de référence (SRF), et un comparateur de phase apte à effectuer une comparaison de phase entre les impulsions détectées successives et les transitions successives du signal de référence de façon à commander l'oscillateur, **caractérisé par le fait que** les moyens de détection comportent des moyens d'échantillonnage (CAN) du signal vidéo, un filtre passe-bas (LPF) connecté aux moyens d'échantillonnage, des moyens de seuillage (MSE) connectés au filtre de façon à ne laisser subsister que des impulsions dont le niveau est inférieur à un seuil, et des moyens de sélection (MSL) aptes à effectuer une sélection en fonction d'un critère de sélection prédéterminé, parmi les impulsions résiduelles situées à l'intérieur d'une fenêtre d'observation centrée sur chaque transition du signal de référence, de celle qui correspond à ladite impulsion de synchronisation horizontale.

13. Dispositif selon la revendication 12, **caractérisé par le fait que** le critère de sélection comporte un critère de dimension par rapport à une dimension moyenne (LM) d'une impulsion de synchronisation horizontale.

14. Dispositif selon la revendication 13, **caractérisé par le fait que** les moyens de sélection (MSL) comportent des premiers moyens de décision (MDC1) aptes à éliminer toutes les impulsions résiduelles dont la largeur est inférieure à un pourcentage prédéterminé de la largeur moyenne d'une impulsion de synchronisation horizontale.

15. Dispositif selon la revendication 14, **caractérisé par le fait que** les premiers moyens de décision (MDC1) sont aptes à sélectionner l'impulsion résiduelle dont la largeur se rapproche le plus de ladite largeur moyenne.

16. Dispositif selon la revendication 12, **caractérisé par le fait que** le critère de sélection comporte un critère de position par rapport à la position attendue de l'impulsion de synchronisation horizontale.

17. Dispositif selon la revendication 16, **caractérisé par le fait que** la position attendue de l'impulsion de synchronisation horizontale est celle de la transition du signal de référence, et **par le fait que** les moyens de sélection (MSL) comportent des moyens de détermination (MDTP) aptes à déterminer l'écart temporel entre chaque impulsion résiduelle et la transition du signal de référence, et des deuxièmes moyens de décision (MDC2) aptes à sélectionner celle qui est affectée de l'écart temporel le plus faible.

18. Dispositif selon la revendication 16 prise en combinaison avec la revendication 13, **caractérisé par le fait que** le critère de sélection est un critère qui combine le critère de position et le critère de dimension.

19. Dispositif selon la revendication 18, **caractérisé par le fait que** les moyens de sélection comportent des premiers moyens de décision (MDC1) aptes à éliminer toutes les impulsions résiduelles dont la largeur est inférieure à un pourcentage prédéterminé de la largeur moyenne d'une impulsion de synchronisation horizontale, et à affecter à chaque impulsion résiduelle non éliminée une première note (N1) en fonction de sa largeur, la première note la plus élevée correspondant à une impulsion dont la largeur est égale à ladite largeur moyenne, **par le fait que** la position attendue de l'impulsion de synchronisation horizontale est celle de la transition du signal de référence (SRF), **par le fait que** les moyens de sélection comportent des moyens de détermination (MDTR) aptes à déterminer l'écart temporel entre chaque impulsion résiduelle non éliminée et la transition du signal de référence, et des deuxièmes moyens de décision (MDC2) aptes à affecter une deuxième note (N2) à chaque impulsion résiduelle non éliminée, la deuxième note la plus élevée correspondant à une impulsion affectée d'un écart temporel nul, **par le fait que** les moyens de sélection comportent des moyens de pondération (MPD) aptes à affecter à chaque impulsion résiduelle non éliminée une note finale (NF) résultant d'une pondération prédéterminée entre ladite première note et ladite deuxième note, et **par le fait que** les moyens de sélection comportent des moyens de décision finaux aptes à sélectionner l'impulsion résiduelle affectée de la note finale la plus élevée.

20. Dispositif selon l'une des revendications 12 à 19, **caractérisé par le fait que** la longueur de la fenêtre d'observation (FOB) est de l'ordre de 0,66 fois la longueur d'une ligne vidéo.

21. Dispositif selon l'une des revendications 12 à 19, **caractérisé par le fait que** la longueur de la fenêtre d'observation est variable.

22. Dispositif selon l'une des revendications 12 à 21, **caractérisé par le fait que** les moyens de détection comportent également des moyens de sélections supplémentaires (MDC1) aptes à détecter en fonction du critère de sélection prédéterminé, parmi les impulsions résiduelles situées à l'extérieur de la fenêtre d'observation, celle qui correspond à une impulsion de synchronisation horizontale, et des moyens d'initialisation aptes, si cette détection est positive, à initialiser, au début de la fenêtre d'observation, l'erreur de phase commandant l'oscillateur à une valeur très élevée.

23. Circuit intégré comportant un dispositif selon l'une des revendications 12 à 22.
